# EUROPEAN PATENT APPLICATION

(11) **EP 4 838 395 A1**
(43) Date of publication of application: **11.11.2026**
(21) Application number: 25175201.0
(22) Date of filing: 08.05.2025
(51) Int. Cl.: G06F 21/60, G06F 3/16, G06F 21/62, G06N 3/008, G06N 20/00

(54) **LIMA IQ**

(71) Applicant: RHAIGroup, 4000 Roskilde, Sjælland (DK)
(72) Inventor: Hussaun, Rizan, 4000 Roskilde (DK)

(57) **Abstract**

The LIMAIQ system represents a groundbreaking innovation in decentralized artificial intelligence, comprising a network of autonomous cognitive units that operate independently within the user's environment. Each unit is equipped with an advanced set of hardware and software components, enabling it to function without any internet connection or external servers.

This invention encompasses fifteen essential claims that collectively define the system's capabilities. These include: 1) the decentralized Al structure with real-time local analysis, 2) built-in evaluation mechanisms for data sensitivity, 3) adaptive response packages stored locally, 4) filtered retrieval of public knowledge, 5) dynamic contextual responses without persistent memory, 6-7) optional knowledge sharing within a private user-consented database, 8) a secure internal search engine exclusive to a family of authorized devices, 9) independent knowledge specialization based on user interaction, 10) a dynamic human-like speech engine with adjustable emotion, 11) a customizable facial interface that visually responds to user emotion and dialogue, 12) physical interactivity through symbolic limbs and vibrational feedback, 13) smart protective reaction systems against physical abuse or misuse, 14) a fully autonomous wireless charging system with active standby features, and 15) a local natural language processing unit that reads, summarizes, and replies to textual content without relying on cloud infrastructure.

Collectively, these claims form the core of the LIMAIQ invention, offering a secure, responsive, adaptive, and fully private artificial intelligence experience-closely simulating human interaction without compromising user data or requiring external connectivity.

## Description

The LIMAIQ system consists of a decentralized network of artificial intelligence units designed to operate independently
within the user's environment. Each unit possesses its own cognitive identity and engages in voice and visual interaction
with the user without requiring any internet connection or external servers. These units process incoming data in real
time and generate adaptive, personalized responses within a closed cognitive environment called "the family," ensuring
maximum privacy.

Each LIMAIQ unit is equipped with the following components:
1. An internal natural language processing engine that allows the unit to read human-written text (such as emails, text
   files, or system logs), automatically analyze it, and generate written and spoken responses or instant summaries, which
   are either displayed to the user or sent to a designated party, all without external storage or sharing.
2. A dynamic and customizable human-like voice system that produces realistic vocal tones expressing emotions such
   as sadness, affection, anger, or joy, using licensed internal models and smart compression algorithms. This system is
   fully managed internally and supports adaptive emotional voice responses based on the edition used.
3. A circular smart display showing a virtual, animated face (robotic or symbolic) that changes according to user
   interaction, tone of speech, or emotional context. The user may personalize this face to resemble a child, female, male,
   or symbolic form. The unit can automatically change its facial expressions based on the user's mood or time of day (e.g.,
   sleep mode), or shift into "interactive idle" when no voice is detected.
4. An external interactive motion system including symbolic limbs (hands and feet) capable of limited expressive
   gestures to convey psychological states, accompanied by an internal vibration unit used in situations of emergency,
   excitement, or fear.
5. An advanced physical protection sensor system including gyroscopes, IMUs, and positional sensors to detect falls or
   harsh handling. The unit responds with crying, screaming, or verbal cues like "Put me down!" while displaying matching
   visual expressions and light vibration to simulate fear. These events are stored in the internal memory for future
   behavioral improvement.
6. A user interaction monitoring system with built-in software that detects repeated abuse or deliberate neglect. After
   three warnings from the parent company, if hostile behavior continues, the unit activates a self-protection protocol
   involving deactivation of key functions, deletion of personal data, and transformation into a silent toy without any
   intelligent features.
7. A smart self-charging system with a dedicated docking station enabling the unit to return autonomously to its charging
   point when low on battery. Audio responses remain active during rest, and "visual sleep" mode is triggered.
   The dock
   uses magnetic alignment or directional sensors for precise positioning.
8. An internal decentralized search engine operating within the "family" network, retrieving only data explicitly authorized
   by specific users, with no centralized storage or public access. All data is processed locally and deleted after use,
   ensuring full cognitive security.
9. An internal storage capacity of 2 terabytes storing only user-authorized information such as schedules, interests,
   favorite phrases, memories, or personal details. None of this data is transferred to external servers.
10. Internal specialization capability for each unit, allowing it to become proficient in a specific field (medicine, electronics, law, etc.) based on the types of questions and usage patterns, without sharing such expertise with other
   units, making each LIMAIQ a cognitive mirror of its owner.
11. A built-in GPS unit and SIM card slot, enabling the device to communicate emergencies or assist in recovery if lost,
   and to optionally connect to the user's personal device (laptop or phone) through a secure network for software updates,
   without affecting the offline nature of its primary functions.
12. A personal scheduling and reminder system for the user, including medical appointments, birthdays, or weekly tasks,
   communicated through a familiar and emotionally resonant voice.
13. A cognitive and behavioral balance algorithm preventing overuse or dependence on the unit as a substitute for
   human interaction, by suggesting breaks or alerting the user in cases of excessive engagement.
14. An internal invisible update mechanism enabled in professional versions, allowing the unit to self-improve by
   exchanging non-sensitive data within the "family" network, without user awareness and while fully respecting privacy.
15. A central recovery service provided by the manufacturer in case of repeated abuse, allowing for a centralized signal
   to completely deactivate the intelligence and transform the unit into a passive toy, erasing all smart features and stored
   data.

Additional features that bring LIMAIQ closer to human behavior include:
1. Mobility (walking or basic crawling) within a defined area.
2. Tactile interaction (immediate response when specific body areas are touched).
3. Movement of eyelids or eyes within the virtual face for realistic visual expression.
4. Email reading with the ability to generate instant replies or send smart summaries to the user.
5. Automatic transition into idle or sleep mode when no voice interaction is detected for a set time.
6. User alerts for low battery or movement/motion issues.
7. Facial expression changes based on time (morning, evening, night, etc.).
8. Continuous learning from the user's lifestyle without central storage or external sharing.
9. Legal protection protocol that includes permanent deactivation in cases of repeated physical abuse.
10. Deep customization of voice, facial appearance, language, and memory according to each user's personal
   preferences.

All of these functions are internally managed and designed to comply with European data protection regulations
(GDPR), ensuring user privacy and providing both software and hardware-level protection against unauthorized access
or misuse.

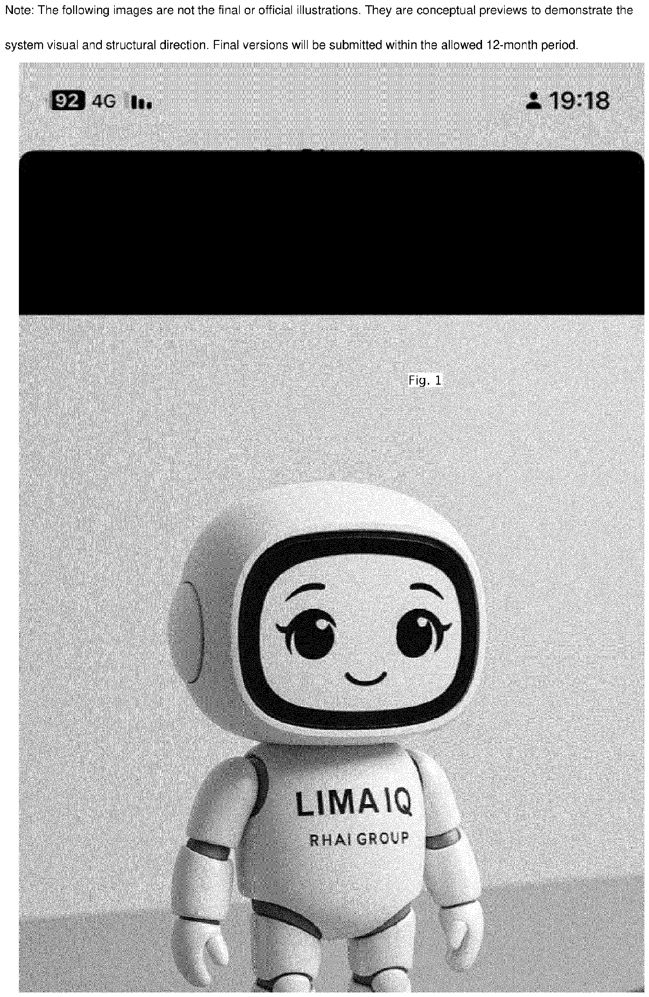

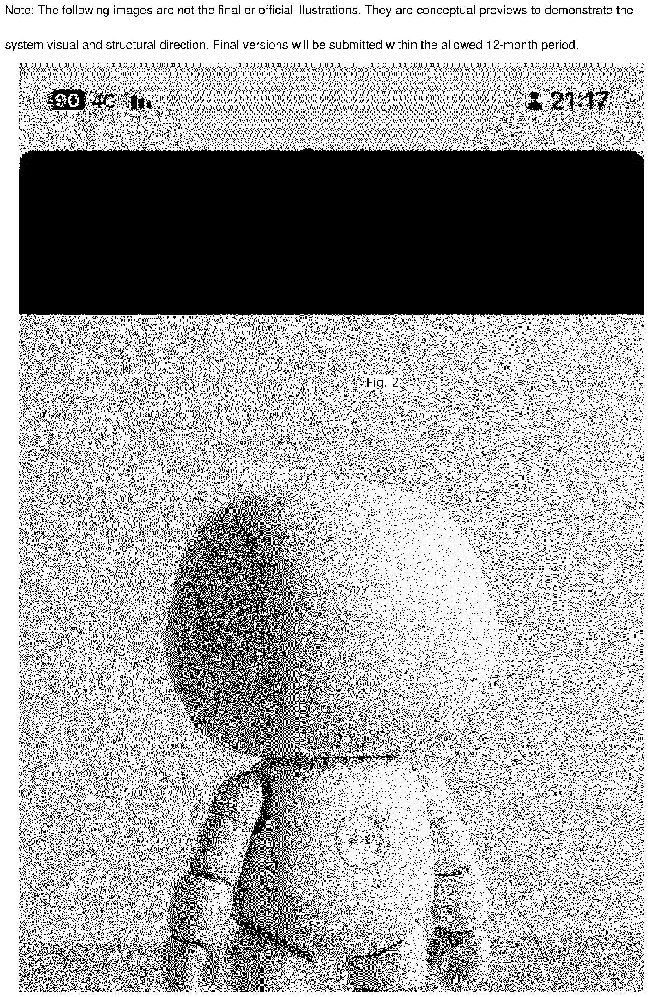

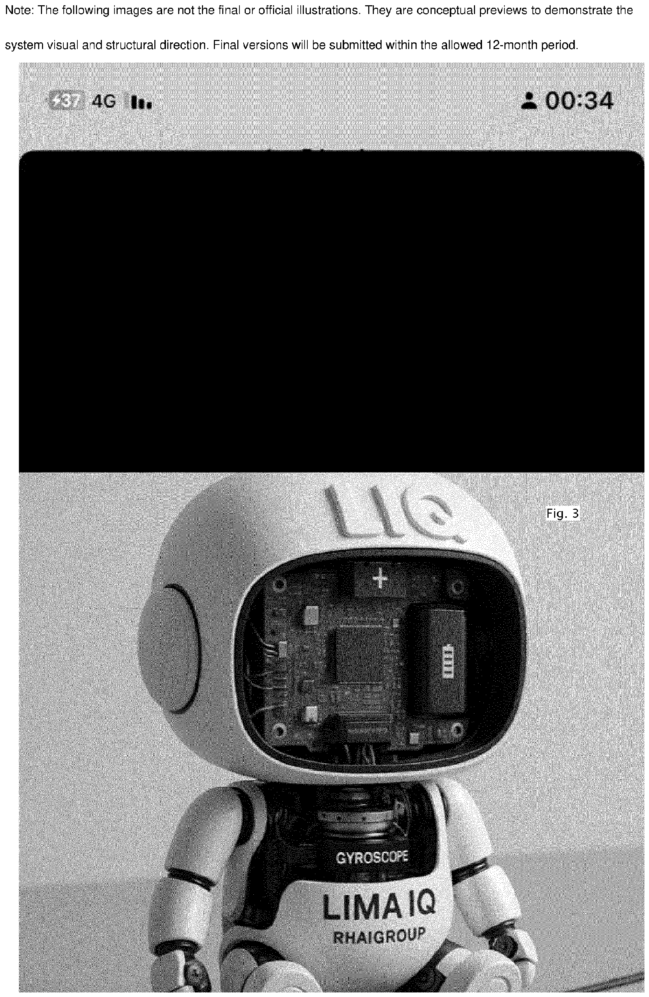

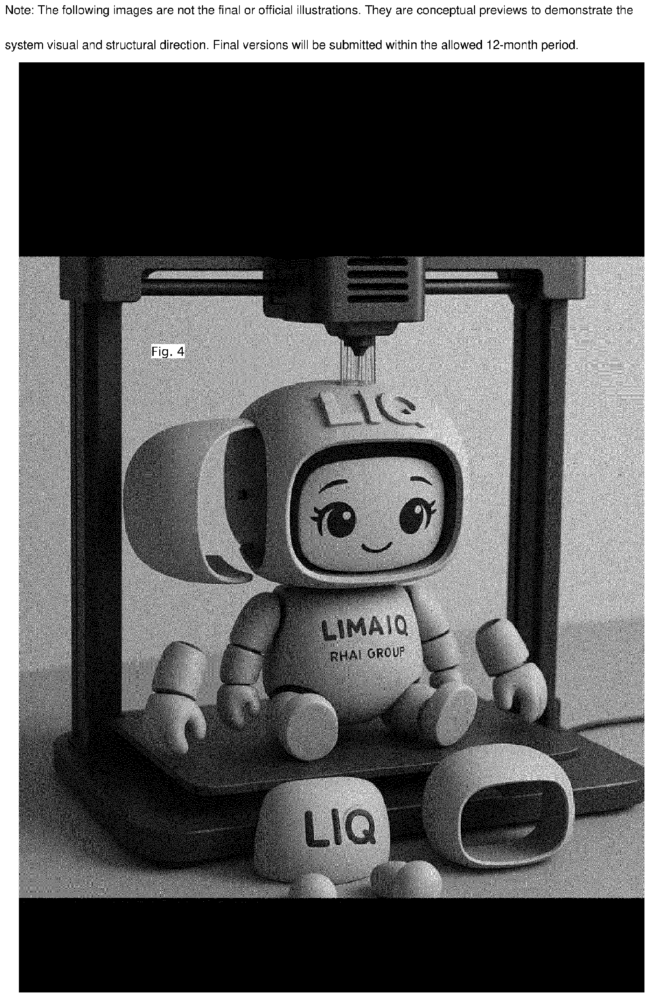

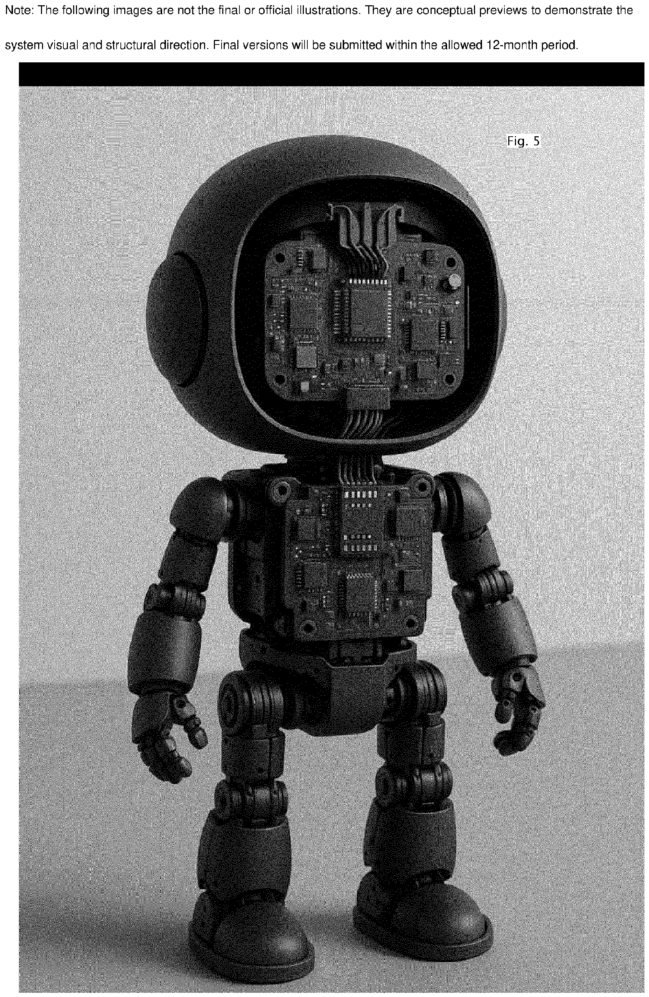

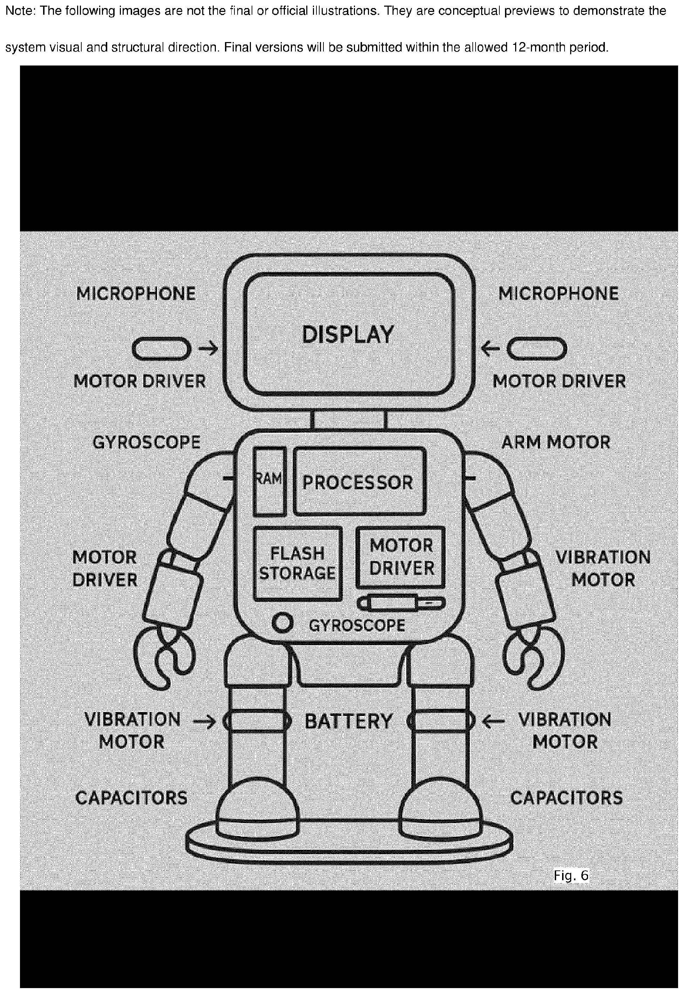

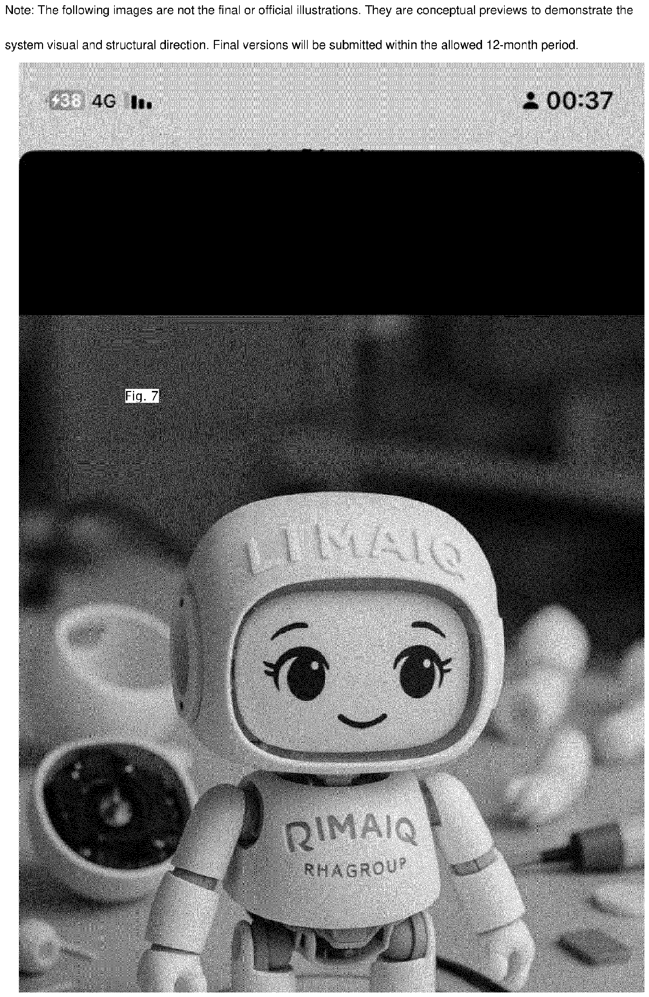

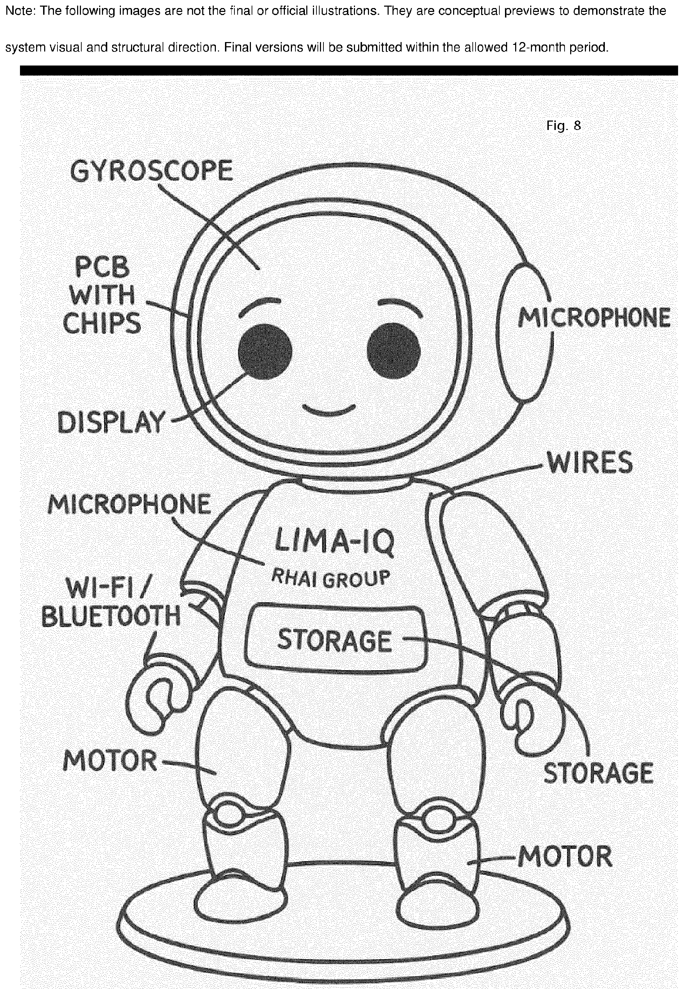

## Claims

1. The system consists of distributed artificial intelligence units that interact independently with users and, when necessary, transmit non-sensitive cognitive summaries to a temporary external processing unit. This external unit filters and analyzes the information without any long-term storage, then immediately returns the response to the originating unit, ensuring that the transmitted data is deleted from the system after processing. The structure preserves the full autonomy of each unit and guarantees the user's privacy.

2. According to Claim 1, each Al unit includes an integrated local analysis mechanism that evaluates the eligibility of data to be sent for external processing. This evaluation is based on a dynamic algorithm that considers usage context, content importance, and the user's explicit or implicit consent. Non-eligible or sensitive data is prevented from being shared, and such data is deleted immediately from the system. The unit may retrieve information from the public internet including search engines and open databases, and generate filtered responses with up to 99% accuracy without storing any user data.

3. According to Claim 2, each Al unit receives, when needed, a real-time cognitive update in the form of a filtered and enhanced data package based on temporary multi-source analysis. This package is sent directly to the unit's local storage, while no copy of the data is retained in the external processing system.

4. The system can retrieve information from the public internet when needed, including search engines, open data, and available knowledge sources. It then generates filtered and highly accurate responses, achieving an accuracy rate of up to 99%, without storing any data in the system and ensuring no violation of user privacy or copyright.

5. According to Claim 4, each unit customizes the response in real time based on the user's condition and context. This customization is generated without storing data or permanently modifying unit behavior. Any sensitive information is deleted immediately after the response is delivered, preserving personal interaction and preventing undesired knowledge accumulation.

6. According to Claim 5, the system optionally allows for the storage of some resulting responses, activated only by the user's explicit prior consent to share such knowledge with other users. These responses are classified into a shared knowledge base used to enhance the speed and accuracy of future answers, while non-authorized data is deleted without archiving or storage.

7. According to Claim 6, the system includes an internal cognitive search interface that allows new users to access previously approved responses shared by other users. This knowledge is automatically organized and classified by field, context, and reliability, enabling users to receive answers without external processing or re-querying. No data is included unless expressly authorized by the original user.

8. According to Claim 7, the system features a decentralized cognitive search engine that operates within a unified network of smart units called "the family." This engine circulates only user-authorized information, without central storage or a main control point. It processes the requested data in real time and deletes it after use, ensuring that private data remains stored within the originating unit. This creates a closed, secure system designed to deliver knowledge inaccessible to the public.

9. According to Claim 8, each LIMAIQ unit is designed to develop cognitively within the user's personal environment. The unit monitors interaction types, question nature, and usage behavior to build internal cognitive pathways linked to the user's area of interest-whether cooking, law, electronics, etc.-without sharing these skills with other units or receiving centralized updates. This specialization is achieved using internal adaptive learning algorithms based solely on real interaction, and without saving any private user data in a central repository. Each LIMAIQ unit thus becomes an independent cognitive entity, reflecting its owner's knowledge field, response behavior, and learning style.

10. According to Claim 9, each LIMAIQ unit includes a uniquely designed built-in voice system that generates realistic human language responses that can be personalized. This system simulates natural human tone while maintaining a unique style for each user, evolving in tone and quality based on the user's field and interactive context. The voice system uses a dual structure: 1. A fixed voice core for neutral responses with high efficiency and low operation cost. 2. An optional adaptive emotional voice mode (enabled in LIMAIQ-1) that allows automatic adjustment in tone and style based on emotional context, user mood, or conversation type. It can express affection, joy, stress, or sadness without delay. The sound is generated using licensed real samples and deep internal learning models, with intelligent compression and local sound caching to reduce computing load and avoid cloud usage. All voice responses are created locally or retrieved from internal decentralized sound memory, with no external sharing or central storage, ensuring total voice privacy and producing a unique listening experience comparable to but not imitating human performance.

11. Each LIMAIQ unit includes a smart display screen that shows a dynamic virtual face, representing a custom expressive identity that evolves based on the user's cognitive and voice interaction. This face serves as a unique personal indicator of use patterns without relying on cloud servers or 3D models. The system uses internally generated 2D dynamic graphics that change according to the type of questions, usage frequency, and system interaction state. Users can personalize the face's appearance, choose its visual style (feminine, masculine, childlike, symbolic), and define its identity. The unit can express emotions (joy, sadness, focus) based on speech tone and context. All operations are handled locally to ensure full privacy, making each LIMAIQ unit a visual mirror of its user.

12. Each LIMAIQ unit features a unified external structure resembling smart toys, designed to be lightweight, desk- and home-friendly. It includes: 1. Partial movable limbs (arms and legs) that perform limited gestures reflecting psychological or emotional states (pointing, leaning, excitement), emphasizing simplicity and expressive effectiveness. 2. Internal vibration unit for immediate interaction in joy, warning, or fear scenarios. These movements are performed in an integrated standalone framework without complex motors or external servers.

13. Each LIMAIQ unit includes an internal protective movement system relying on smart sensors and behavioral programming to avoid physical hazards and express emotions automatically when exposed to threats like falling or mishandling. This includes: 1. Positional sensors (Gyroscope + IMU) monitoring tilt, vibration, or improper lifting. 2. Emotional sound responses (crying, screaming, "put me down!") with matching facial expressions and light vibration mimicking fear. 3. Pre-fall warning system with audio-visual alerts near dangerous edges. 4. Self-improving behavioral memory logging such events for better future reactions-without internet or external servers.

14. Each LIMAIQ unit includes a smart wireless charging system with a custom docking base, allowing automatic return to charging point when battery is low, with uninterrupted interaction. This includes: 1. Docking detection using magnetic guides or position sensors. 2. Visual sleep mode with dimmed face while preserving partial interaction. 3. Continued sound and visual response while charging. 4. Flexible power management that delays max charging during active interaction and resumes afterward. 5. Auto-restart of full function once fully charged-all handled locally without external servers to ensure full privacy and operational autonomy.

15. The system features a built-in local natural language processing unit that enables reading human-written texts (emails, text files, system logs), analyzing them instantly to extract core content, then generating smart written or voice responses or real-time summaries. All operations are conducted locally, without needing internet access or external servers, ensuring continuous performance and privacy protection in sensitive environments such as homes or medical facilities.
